# EUROPEAN PATENT APPLICATION

(11) **EP 4 694 226 A1**
(43) Date of publication of application: **11.02.2026**
(21) Application number: 23929169.3
(22) Date of filing: 28.03.2023
(51) Int. Cl.: H04W 4/50

(54) **COMMUNICATION METHOD AND DEVICE**

(71) Applicant: Guangdong OPPO Mobile Telecommunications Corp., Ltd., Wusha, Chang'an, Dongguan 523860 (CN)
(72) Inventor: GUO, Boren, Dongguan, Guangdong 523860 (CN); WANG, Yaxin, Dongguan, Guangdong 523860 (CN)
(74) Representative: Mewburn Ellis LLP
(86) International application number: PCT/CN2023/084353
(87) International publication number: WO 2024/197569

(57) **Abstract**

Embodiments of the present disclosure provide a communication method and a device, and the communication method includes: transmitting, by a first network element, a first message, where the first message includes at least one of the following information: service area information of the first network element, sensing capability information of the first network element, or sensing task information carried by the first network element. The present disclosure can select a sensing function network element for performing a sensing task.

## Description

### TECHNICAL FIELD

The present disclosure relates to the field of communications, and in particular, to a communication method and a device.

### BACKGROUND

Radio electromagnetic wave signals used by cellular networks have ambient sensing capabilities. Therefore, sensing capabilities may be supported in communication networks, such as using sensing function network elements to achieve sensing. In response to sensing requests of a sensing task consumer, how to select a suitable sensing function network element to perform a sensing task is a technical problem that needs to be solved.

### SUMMARY

Embodiments of the present disclosure provide a variety of communication methods and devices that may select sensing function network elements to perform sensing tasks.

The embodiments of the present disclosure provide a communication method, including:
transmitting, by a first network element, a first message, where the first message includes at least one of following information:
service area information of the first network element;
sensing capability information of the first network element; or
sensing task information carried by the first network element.

The embodiments of the present disclosure further provide a communication method, including:
receiving, by a second network element, a registration request message from a first network element, where the registration request message includes at least one of following information:
service area information of the first network element;
sensing capability information of the first network element; or
sensing task information carried by the first network element.

The embodiments of the present disclosure further provide a communication method, including:
receiving, by a third network element, a sensing task information notification message from a first network element, where the sensing task information notification message includes at least one of following information:
service area information of the first network element;
sensing capability information of the first network element; or
sensing task information carried by the first network element.

The embodiments of the present disclosure further provide a communication method, including:
transmitting, by a sensing task consumer or a core network element, a sensing request message, where the sensing request message carries at least one of a sensing task requirement, a sensing control network element identifier, or a sensing task execution node identifier of a sensing task.

The embodiments of the present disclosure further provide a first network element, including:
a first transmitting module, configured to transmit a first message, where the first message includes at least one of the following information:
service area information of the first network element;
sensing capability information of the first network element; or
sensing task information carried by the first network element.

The embodiments of the present disclosure further provide a second network element, including:
a fourth receiving module, configured to receive a registration request message from a first network element, where the registration request message includes at least one of following information:
service area information of the first network element;
sensing capability information of the first network element; or
sensing task information carried by the first network element.

The embodiments of the present disclosure further provide a third network element, including:
a sixth receiving module, configured to receive a sensing task information notification message from a first network element, where the sensing task information notification message includes at least one of following information:
service area information of the first network element;
sensing capability information of the first network element; or
sensing task information carried by the first network element.

The embodiments of the present disclosure further provide a device, including:
a sixth transmitting module, configured to transmit a sensing request message, where the sensing request message carries at least one of a sensing task requirement, a sensing control network element identifier or a sensing task execution node identifier of a sensing task.

The embodiments of the present disclosure further provide a communication device, including a processor, a memory, and a transceiver. The memory is configured to store computer programs, and the processor is configured to call and run the computer programs stored in the memory and control the transceiver, so as to enable the device to perform the above methods.

The embodiments of the present disclosure further provide a chip, which is configured to implement the above methods.

Specifically, the chip includes: a processor, which is configured to call and run a computer program from a memory, so as to enable a device equipped with the chip to perform the above methods.

The embodiments of the present disclosure further provide a computer readable storage medium, which is configured to store a computer program. When being executed by a device, the computer program enables the device to perform the above methods.

The embodiments of the present disclosure further provide a computer program product, including computer program instructions. The computer program instructions enable a computer to perform the above methods.

The embodiments of the present disclosure further provide a computer program that, when being executed on a computer, enables the computer to perform the above methods.

In the embodiments of the present disclosure, at least one of service area information, sensing capability information or carried sensing task information is transmitted by the first network element to provide information for a selection of a sensing function network element, so as to select a suitable sensing function network element to perform a sensing task.

### BRIEF DESCRIPTION OF THE DRAWINGS

FIG. 1 is a schematic diagram of an application scenario of embodiments of the present disclosure.
FIG. 2 is a diagram exemplarily showing a 5G network system architecture.
FIG. 3A is a schematic diagram of a sensing process triggered by an application function (AF).
FIG. 3B is a schematic diagram of a sensing process triggered by a user equipment (UE).
FIG. 4 is a schematic flowchart of a communication method 400, in accordance with the embodiments of the present disclosure.
FIG. 5 is a flowchart of an implementation of registration of a sensing function (SF) capability and carried sensing task information, in accordance with the embodiments of the application.
FIG. 6 is a flowchart of an implementation of SF discovery and selection based on an SF capability and carried sensing task information, in accordance with the embodiments of the present disclosure.
FIG. 7 is a flowchart of an implementation of subscription of an SF capability and carried sensing task information, in accordance with the embodiments of the present disclosure.
FIG. 8 is a flowchart of an implementation of SF discovery and selection based on subscription of sensing task information, in accordance with the embodiments of the present disclosure.
FIG. 9 is a flowchart of an implementation of specifying SF by a sensing task consumer, in accordance with the embodiments of the present disclosure.
FIG. 10 is a schematic flowchart of a communication method 1000, in accordance with the embodiments of the present disclosure.
FIG. 11 is a schematic flowchart of a communication method 1100, in accordance with the embodiments of the present disclosure.
FIG. 12 is a schematic flowchart of a communication method 1200, in accordance with the embodiments of the present disclosure.
FIG. 13 is a schematic structural diagram of a first network element 1300, in accordance with the embodiments of the present disclosure.
FIG. 14 is a schematic structural diagram of a first network element 1400, in accordance with the embodiments of the present disclosure.
FIG. 15 is a schematic structural diagram of a second network element 1500, in accordance with the embodiments of the present disclosure.
FIG. 16 is a schematic structural diagram of a second network element 1600, in accordance with the embodiments of the present disclosure.
FIG. 17 is a schematic structural diagram of a third network element 1700, in accordance with the embodiments of the present disclosure.
FIG. 18 is a schematic structural diagram of a third network element 1800, in accordance with the embodiments of the present disclosure.
FIG. 19 is a schematic structural diagram of a device 1900, in accordance with the embodiments of the present disclosure.
FIG. 20 is a schematic structural diagram of a communication device 2000, in accordance with the embodiments of the present disclosure.
FIG. 21 is a schematic structural diagram of a chip 2100, in accordance with the embodiments of the present disclosure.

### DETAILED DESCRIPTION

Technical solutions in the embodiments of the present disclosure will be described below with reference to the drawings in the embodiments of the present disclosure.

It should be noted that the terms "first", "second", etc. in the description, the claims and the above drawings in the embodiments of the present disclosure are used to distinguish similar objects, and are not necessarily used to describe a specific order or sequence. The objects described with the "first" and "second" described at the same time may be the same or different.

The technical solutions of the embodiments of the present disclosure may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial networks (NTN) system, a universal mobile telecommunication system (UMTS), wireless local area networks (WLAN), wireless fidelity (WiFi), a 5th-generation communication (5G) system, beyond 5th-Generation mobile communication (B5G) or other communication systems.

Generally speaking, traditional communication systems support a limited number of connections and are easy to be implemented. However, with the development of communication technology, mobile communication systems will not only support traditional communication, but will also support, for example, device to device (D2D) communication, machine to machine (M2M) communication, machine type communication (MTC), vehicle to vehicle (V2V) communication, or vehicle to everything (V2X) communication, or the like. The embodiments of the present disclosure may also be applied to these communication systems.

In one implementation, a communication system in the embodiments of the present disclosure may be applied to a carrier aggregation (CA) scenario, a dual connectivity (DC) scenario, or a standalone (SA) networking scenario.

In one implementation, a communication system in the embodiments of the present disclosure may be applied to an unlicensed spectrum, which may also be considered as a shared spectrum. Alternatively, the communication system in the embodiments of the present disclosure may also be applied to a licensed spectrum, which may also be considered as an unshared spectrum.

In the embodiments of the present disclosure, various embodiments are described in conjunction with a network device and a terminal device. Here, the terminal device may also be referred to as user equipment (UE), an access terminal, a user unit, a user station, a mobile station, a mobile platform, a remote station, a remote terminal, a mobile device, a user terminal, a terminal, a wireless communication device, a user agent or user device, or the like.

The terminal device may be a station (ST) in a WLAN, which may be a cellular phone, a cordless telephone, a session initiation protocol (SIP) telephone, a wireless local loop (WLL) station, a personal digital assistant (PDA) device, a handheld device with a wireless communication function, a computing device or other processing device connected to a wireless modem, an in-vehicle device, a wearable device, a terminal device in a next-generation communication system (e.g., an NR network), a terminal device in a future evolved public land mobile network (PLMN) network, or the like.

In the embodiments of the present disclosure, the terminal device may be deployed on land, including indoor or outdoor, handheld, wearable or in-vehicle; the terminal device may also be deployed on water (e.g., on a steamship); the terminal device may also be deployed in air (e.g., on an airplane, on a balloon and on a satellite).

In the embodiments of the present disclosure, the terminal device may be a mobile phone, a pad, a computer with wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, or a wireless terminal device in smart home, or the like.

As an example rather than a limitation, in the embodiments of the present disclosure, the terminal device may further be a wearable device. The wearable device may also be referred to as a wearable smart device, which is a general term for wearable devices developed by performing the intellectualized design on daily wear by applying wearable technology, such as glasses, gloves, watches, clothing and shoes. The wearable device is a portable device that is worn directly on a body or integrated into the user's clothes or accessories. The wearable device not only is a hardware device, but also implements powerful functions through software support, data interaction, and cloud interaction. Generalized wearable smart devices include devices that are fully functional, large in size, and may implement complete or partial functions without relying on smartphones, such as smart watches or smart glasses, as well as devices that only focus on a certain type of application function and need to be used in conjunction with other devices (e.g., smartphones), such as various smart bracelets and smart jewelry for monitoring vital signs, or the like.

In the embodiments of the present disclosure, the network device may be a device for communicating with a mobile device. The network device may be an access point (AP) in the WLAN, a base station (Base Transceiver Station, BTS) in the GSM or CDMA, a base station (NodeB, NB) in the WCDMA, an evolutional base station (Evolutional Node B, eNB or eNodeB) in the LTE, or a relay station or access point, or an in-vehicle device, a wearable device, and a network device (gNB) in the NR network, or a network device in the future evolved PLMN network, or a network device in the NTN network, or the like.

As an example rather than a limitation, in the embodiments of the present disclosure, the network device may have mobile characteristics. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may further be a base station installed on land, water or the like.

In the embodiments of the present disclosure, a network device may provide a service for a cell, and the terminal device may communicate with the network device through a transmission resource (e.g., a frequency domain resource, or a spectrum resource) used by the cell. The cell may be a cell corresponding to the network device (e.g., a base station). The cell may belong to a macro base station or a base station corresponding to a small cell. The small cells herein may include: a metro cell, a micro cell, a pico cell, a femto cell, or the like. These small cells have characteristics of small coverage area and low transmission power, which are suitable for providing high-speed data transmission services.

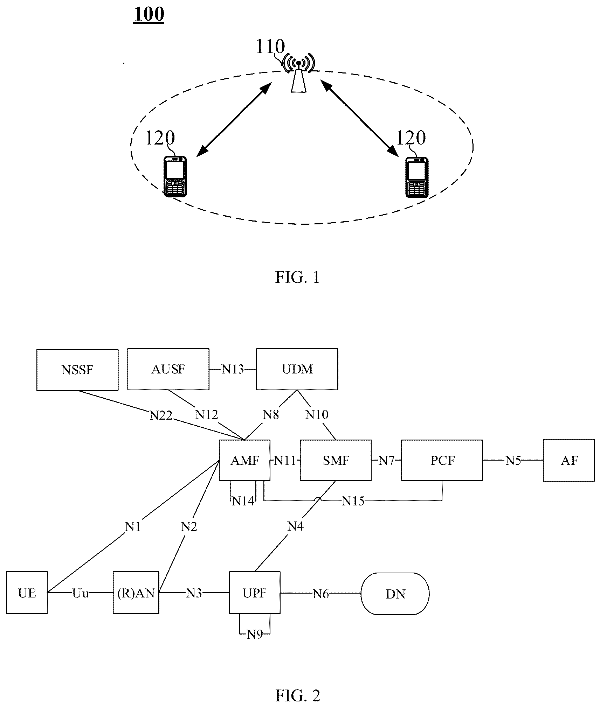

FIG. 1 exemplarily shows a communication system 100. The communication system includes a network device 110 and two terminal devices 120. In one implementation, the communication system 100 may include a plurality of network devices 110, each of which may have a coverage area in which another number of terminal devices may be included, which is not limited in the embodiments of the present disclosure.

In one implementation, the communication system 100 may further include other network entities such as a mobility management entity (MME), an access and mobility management function (AMF), which is not limited in the embodiments of the present disclosure.

The network device may also include an access network device and a core network device. That is to say, the wireless communication system further includes a plurality of core networks for communicating with the access network device. The access network device may be an evolutional base station (evolutional node B, may be abbreviated as eNB or e-NodeB), a macro base station, a micro base station (also referred to as a "small base station"), a pico base station, an access point (AP), a transmission point (TP) or a new generation Node B (new generation Node B, gNodeB), etc., in a long-term evolution (LTE) system, a next-generation (mobile communication system) (next radio, NR) system or a licensed auxiliary access long-term evolution (authorized auxiliary access long-term evolution, LAA-LTE) system.

It should be understood that, in the embodiments of the present disclosure, a device with a communication function in the network/system may be referred to as a communication device. Considering the communication system shown in FIG. 1 as an example, the communication device may include a network device with a communication function and a terminal device with a communication function. The network device and the terminal device may be the specific devices in the embodiments of the present disclosure, which will not be repeated herein. The communication device may further include other devices in the communication system, such as a network controller, a mobility management entity, and other network entities, which are not limited in the embodiments of the present disclosure.

FIG. 2 is a diagram exemplarily showing a 5G network system architecture. The UE establishes an access layer connection with an access network (AN) through a Uu port, so as to exchange access layer messages and wireless data transmission. The UE establishes a non-access stratum (NAS) connection with an AMF through an N1 port, so as to exchange NAS messages. The AMF is a mobility management function in the core network, and an SMF is a session management function in the core network. In addition to performing a mobility management on the UE, the AMF is further responsible for forwarding messages related to session management between the UE and the SMF. PCF is a policy management function in the core network, and responsible for formulating policies related to mobility management, session management, and billing of the UE. UPF is a user plane function in the core network, and transmits data with the external data network through an N6 interface, and transmits data with the AN through an N3 interface.

It should be understood that the terms "system" and "network" are often used interchangeably herein. The term "and/or" herein is only an association relationship to describe associated objects, which indicates that there are three kinds of relationships. For example, "A and/or B" may indicate three cases in which: A exists alone, both A and B exist, and B exists alone. In addition, a character "/" herein generally indicates that the associated objects before and after the character are in an "or" relationship.

It should be understood that "indicate" mentioned in the embodiments of the present disclosure may mean a direct indication, an indirect indication, or may mean that there is an association relationship. For example, A indicating B may mean that A directly indicates B, for example, B may be acquired by A; alternatively A indicating B may mean that A indirectly indicates B, for example, A indicates C, and B may be acquired by C; alternatively A indicating B may mean that there is an association relationship between A and B.

In the description of the embodiments of the present disclosure, the term "correspond" may indicate that there is a direct correspondence or an indirect correspondence between two items, or may indicate that an association relationship between the two, or may indicate a relationship of indicating and being indicated, or a relationship of configuring or being configured, or the like.

In order to facilitate understanding of the technical solutions of the embodiments of the present disclosure, the related technologies in the embodiments of the present disclosure are described below. The following related technologies may be, as optional solutions, arbitrarily combined with the technical solutions of the embodiments of the present disclosure, and they all belong to the protection scope of the embodiments of the present disclosure.

Radio electromagnetic wave signals used by cellular networks may not only be used for wireless data transmission and communication, but also have ambient sensing capabilities, such as user motion or gesture recognition, breathing monitoring, terminal movement speed measurement, environmental imaging, or weather monitoring. Therefore, cellular networks may be considered not only for communication and data transmission, but also for the acquisition of sensing information.

For example, sensing capabilities may be supported in B5G networks, and sensing functions may be supported in 3GPP networks by adding sensing control network elements (Sensing Function) and corresponding processes. When an application transmits a sensing request for the target UE to the core network of the 3GPP network, the core network selects a correct access network device or an auxiliary UE through the sensing control network element or the AMF, and triggers a capability of performing a sensing-related wireless measurement, initiates a measurement of sensing information and generates a sensing result.

The main wireless sensing scenarios of sensing and communication integration (referred to as integrated communication and sensing) are as follows:
1) Base station echo sensing link (single gNB sensing): transmitting a sensing signal and receiving an echo signal by a base station;
2) Inter-base station sensing link (gNB-gNB sensing): receiving, by a base station B, a sensing signal transmitted by a base station A;
3) Radio interface uplink sensing link (UE-gNB uplink sensing): receiving, by a base station, a sensing signal transmitted by a terminal;
4) Radio interface downlink sensing link (UE-gNB downlink sensing): receiving, by a terminal, a sensing signal transmitted by a base station;
5) Terminal echo sensing link (single UE sensing): transmitting a sensing signal and receiving an echo signal by a terminal; and
6) Inter-terminal sensing link (UE-UE sensing): receiving, by a terminal B, a sensing signal transmitted by a terminal A.

The base station echo sensing link mode may also be referred to as an autonomous transmission and reception sensing mode by a radio access network (RAN), the inter-base station sensing link mode may also be referred to as a collaborative sensing mode between RANs, the radio interface uplink sensing link mode and the radio interface downlink sensing link mode may also be referred to as a collaborative sensing mode between UE and RAN, the terminal echo sensing link mode may also be referred to as an autonomous transmission and reception sensing mode by UE, and the inter-terminal sensing link mode may also be referred to as a collaborative sensing mode between UEs. Alternatively, the base station echo sensing link mode and the inter-base station sensing link mode may also be referred to as RAN-based sensing, the radio interface uplink sensing link mode and the radio interface downlink sensing link mode may also be referred to as UE-assisted sensing, and the terminal echo sensing link mode and the inter-terminal sensing link mode may also be referred to as UE-based sensing.

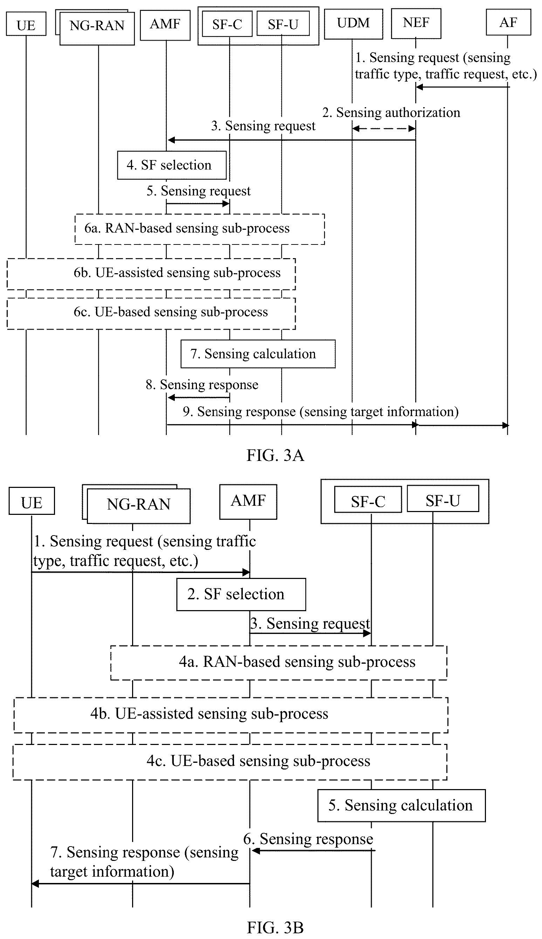

FIG. 3A is a schematic diagram of a sensing process triggered by an application function (AF). In this process, the AF transmits a sensing request to an access and mobility management function (AMF) through a network exposure function (NEF), and then the AMF transmits it to a sensing function network element (Sensing Function, SF), thereby achieving the function of SF controlling the base station or UE to perform a sensing measurement based on the sensing request, and the function of the SF calculating based on a sensing measurement data reported by the base station or UE and opening a sensing result to the AF. The SF in FIG. 3A is split into a control plane network element (SF-C) and a user plane network element (SF-U). For the SF split scenario, SF-C and SF-U may be considered as a whole.

FIG. 3B is a schematic diagram of a sensing process triggered by a UE, in which the AMF transmits a received sensing request directly to the SF node, thereby achieving the function of the SF controlling the base station or UE to perform a sensing measurement based on the sensing request, and the function of the SF calculating based on a sensing measurement data reported by the base station or UE and returning a sensing result to the UE.

In the existing solution, the AMF may select a suitable SF based on the target area information or the location information of the target UE. The SF may register its service area in the network repository function (NRF), and then AMF may select SF by querying NRF. In actual situations, AF may initiate a same sensing task request or a sensing task request with some overlapping services for multiple times. However, in the existing solution, AMF only selects based on the service area of SF, and may select a plurality of SFs to perform a same task, resulting in redundant sensing traffic load, unnecessary signaling overhead and resource waste. In addition, the sensing modes may be classified into RAN-based sensing, UE-assisted sensing, and UE-based sensing. According to the different requirements of sensing traffic, SF needs to select a suitable sensing mode to perform sensing tasks. For example, for area sensing scenarios such as autonomous driving, the sensing range is wide, and an RAN-based sensing mode is required. In scenarios of smart life, UE-assisted sensing or UE-based sensing may perform physical health monitoring and weather monitoring through wireless channel changes. In the existing solution, SF performs a selection of sensing modes. However, in a case where the SF cannot support all three sensing modes, if a sensing capability (e.g., supported sensing modes) of the SF selected based solely on the SF service area cannot match the sensing modes required by the sensing task, the sensing request will fail, thereby causing additional signaling load.

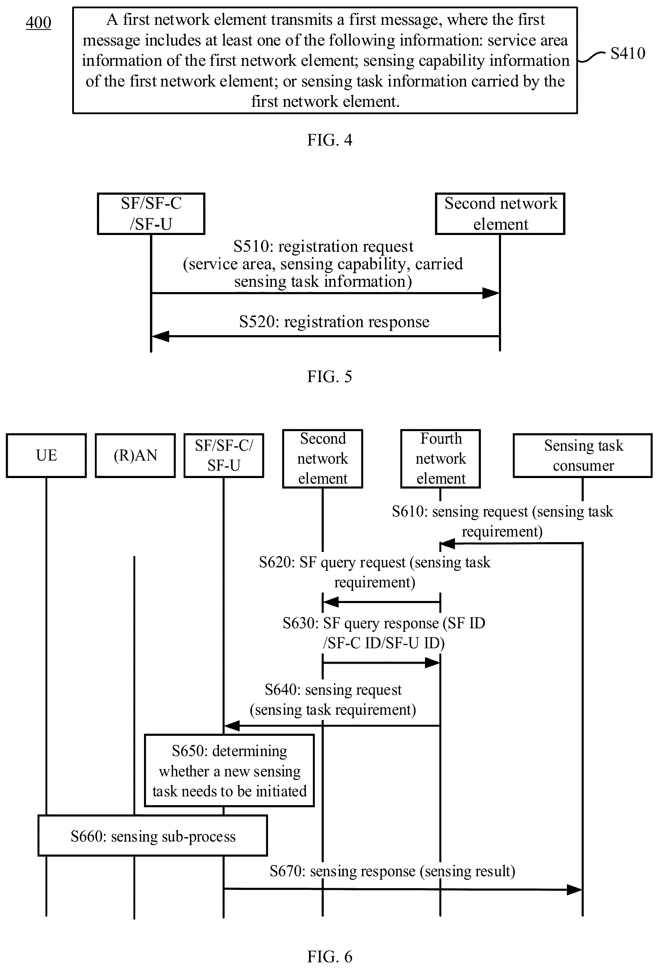

A communication method is provided in the embodiments of the present disclosure. FIG. 4 is a schematic flowchart of a communication method 400, in accordance with the embodiments of the present disclosure. The method may be applied to the system shown in FIG. 1 or FIG. 2, but is not limited thereto. The method includes at least part of the following.

In S410, a first network element transmits a first message, where the first message includes at least one of the following information:
service area information of the first network element;
sensing capability information of the first network element; or
sensing task information carried by the first network element.

The first network element may include an SF. Alternatively, for a scenario in which the SF is split into a sensing function control plane network element (SF-C) and a sensing function user plane network element (SF-U), the first network element may be an SF composed of SF-C and SF-U, or the first network element may be an SF-C or an SF-U.

The service area information of the first network element may include at least one of the following:
(1) a reference point coordinate and/or radius;
(2) at least one of reference point coordinate, area length, or area width;
(3) one or more zone identifiers, which are used to indicate geographical areas (Zone IDs); or
(4) 3GPP internal area identifiers, such as Cell ID information and Tracking area ID information.

The sensing capability information of the first network element may include at least one of the following:
a type of sensing data that supports processing;
a supported sensing scenario;
a supported sensing accuracy; or
a supported sensing mode.

For example, the supported sensing scenario may include: area-oriented and target-oriented.

For another example, the supported sensing mode may include: autonomous transmission and reception by RAN, collaboration between RANs, collaboration between UE and RAN, autonomous transmission and reception by UE, and collaboration between UEs.

The sensing task information carried by the first network element may include: sensing information of a sensing task (or referred to as sensing task performed historically) that has been performed completely by the first network element; and/or sensing information of a sensing task that is being performed by the first network element.

In some implementations, the sensing information of the sensing task that has been performed completely by the first network element and/or the sensing task that is being performed by the first network element may include at least one of the following:
a sensing task type;
sensing target information;
sensing result description information;
a mode of performing a sensing task;
a sensing node involved in a sensing task;
time information for performing a sensing task; or
a number of sensing tasks being performed.

The sensing task type may include: target tracking, weather measurement, user action or gesture recognition, breathing monitoring, terminal movement speed measurement, and environmental imaging;
the sensing target information may include: sensing target area and sensing target object information;
the sensing result description information may include: precision, accuracy, data type and other information of a sensing result;
the mode of performing the sensing task may include: autonomous transmission and reception by RAN, collaboration between RANs, collaboration between UE and RAN, autonomous transmission and reception by UE, and collaboration between UEs;
the information of the sensing node involved in the sensing task may include: a UE ID or an RAN ID;
the time information for performing the sensing task may include: a date and a duration for performing the sensing task.

In some implementations, the first network element may register its sensing capability and/or carried sensing task information in a core network element or an application function (AF). Alternatively, in some other implementations, the core network element or the sensing task consumer may subscribe to the first network element for the sensing capability and/or carried sensing task information of the first network element. The carried sensing task information may include sensing information of a sensing task that has been performed completely and/or sensing information of a sensing task that is being performed, and this content is applicable to both of the above two implementations.

Specific embodiments are described in detail below with reference to the drawings.

### Embodiment 1:

In the embodiment, the first network element registers a sensing capability and/or carried sensing task information of the first network element in a core network element or an AF. A first message transmitted by the first network element may specifically be a registration request message. The first network element transmits a registration request message to a second network element. The second network element may include a core network element or an AF. The registration request message carries at least one of service area information, sensing capability information or carried sensing task information of the first network element.

FIG. 5 is a flowchart of an implementation of registration of an SF capability and carried sensing task information, in accordance with the embodiments of the present disclosure. In the embodiment, the description is given by considering an example in which the first network element is the SF. The first network element may also be other network elements (e.g., a whole composed of SF-C and SF-U, SF-C, or SF-U). As shown in FIG. 5, the process includes the following steps.

In S510, the SF, SF-C or SF-U transmits a registration request message to the second network element, where the registration request message includes at least one of the following information.
(1) Service area, including at least one of the following:
   a reference point coordinate and/or radius;
   at least one of reference point coordinate, area length, or area width;
   one or more zone identifiers, which are used to indicate geographical areas (e.g., Zone IDs); or
   3GPP internal area identifiers, such as Cell ID information and Tracking Area ID information.
(2) Sensing capability, including at least one of the following:
   a type of sensing data that supports processing;
   a supported sensing scenario, such as area-oriented and target-oriented;
   a supported sensing accuracy; or
   a supported sensing mode, such as autonomous transmission and reception by RAN, collaboration between RANs, collaboration between UE and RAN, autonomous transmission and reception by UE or collaboration between UEs.
(3) Carried sensing task information, including sensing information of a sensing task that has been performed completely (or historically performed) by the SF, SF-C, or SF-U, and/or sensing information of a sensing task that is being performed by the SF, SF-C, or SF-U; the sensing information may include at least one of the following:
   a sensing task type, such as target tracking or weather measurement;
   sensing target information, such as sensing target area and sensing target object information;
   sensing result description information, such as precision, accuracy, data type of the sensing result;
   a mode of performing a sensing task, such as autonomous transmission and reception by RAN, collaboration between RANs, collaboration between UE and RAN, autonomous transmission and reception by UE, or collaboration between UEs;
   a sensing node involved in a sensing task, such as a UE ID or an RAN ID;
   a date and a duration for performing a sensing task; or
   a number of sensing tasks being performed.

In S520, the second network element feeds back a registration response message to the SF, SF-C or SF-U, where the registration response message may be used for notifying the SF, SF-C or SF-U that at least one of the service area, the sensing capability, or the carried sensing task information has been successfully registered. The SF, SF-C or SF-U receives the registration response message from the second network element.

In some examples, the second network element may include a core network element or an AF. The core network elements may include an NRF, an NEF, a unified data repository function (UDR) or a unified data management function (UDM), or the like.

The second network element receives the registered capability and carried sensing task information from each first network element (e.g., an SF, a whole composed of SF-C and SF-U, an SF-C, or an SF-U), and saves this information. The capability (e.g., SF capability, SF-C capability or SF-U capability) and the carried sensing task information of the first network element may be used to select a suitable SF, SF-C or SF-U during the sensing process. For example, when a sensing task consumer requests a sensing task through other network element, the second network element receives a sensing node query request (e.g., an SF query request) transmitted by the other network element, and uses the capability and the carried sensing task information of each SF, SF-C or SF-U to select a suitable SF, SF-C or SF-U to perform the sensing task, and feeds back the selected SF, SF-C or SF-U to the other network element. Alternatively, when the sensing task consumer directly requests a sensing task from the second network element, the second network element uses the capability and the carried sensing task information of each SF, SF-C or SF-U to select a suitable SF, SF-C or SF-U to perform the sensing task, and requests the SF, SF-C or SF-U to perform the sensing task.

FIG. 6 is a flowchart of an implementation of SF discovery and selection based on an SF capability and carried sensing task information, in accordance with the embodiments of the present disclosure. In the embodiment, the description is given by considering an example in which the first network element is an SF and the sensing task consumer initiates a sensing request to a fourth network element. The first network element may also be other network elements (e.g., a whole composed of SF-C and SF-U, an SF-C, or an SF-U). The fourth network element may include a core network device (e.g., an AMF or an NEF). Before the SF discovery and selection process shown in FIG. 6, the second network element may pre-store the SF capabilities and the carried sensing task information of a plurality of SFs. For example, using the process shown in FIG. 5, various SFs, SF-Cs or SF-Us pre-register their own capabilities and carried sensing task information in the second network element.

As shown in FIG. 6, the SF discovery and selection process includes the following steps.

In S610, the sensing task consumer transmits a sensing request message to the fourth network element, where the sensing request message carries a sensing task requirement of the requested sensing task. For example, the sensing task requirement may include at least one of a sensing task type, sensing target information, sensing node information, a sensing mode, a sensing data type, a sensing accuracy, a sensing resolution, a frame rate, a duration, a delay or sensing target area information. The fourth network element may include a network element (e.g., an AMF or an NEF).

For example, in some implementations, the sensing request message includes at least one of the following information:
(1) a sensing task type, such as target tracking or weather measurement.
(2) a task requirement, such as at least one of the following: a sensing resolution, a sensing accuracy, a frame rate, a duration, sensing target area information, a delay, or sensing target information (e.g., vehicle type, vehicle identifier, location information);
(3) specified sensing node information, such as UE identifier information or RAN identifier information; or
(4) a specified sensing mode, such as autonomous transmission and reception by RAN, collaboration between RANs, collaboration between UE and RAN, autonomous transmission and reception by UE, or collaboration between UEs.

In S620, the fourth network element transmits a sensing node query request (e.g., an SF query request) to the second network element, where the sensing node query request may carry the sensing task requirement (i.e., the sensing task information including the sensing task type and the task requirement, the specified sensing node information, and the specified sensing mode). The second network element may include a core network element, such as an NRF, an NEF, a UDM or a UDR.

In S630, the second network element may determine one or more first network elements (e.g., an SF, an SF-C or an SF-U) that meet a first requirement and determine workloads of the first network elements (e.g., an SF, an SF-C or an SF-U) that meet the first requirement based on the sensing task requirement carried in the sensing node query request. The workload may refer to the number of sensing tasks being performed by the first network element (e.g., an SF, an SF-C or an SF-U).

The first requirement may include at least one of the following:
that the sensing task requirement carried in the sensing node query request is met;
that a sensing result of a sensing task requested by the sensing node query request may be determined based on a sensing result and/or a sensing measurement data of the sensing task that has been performed completely by the first network element; or
that the sensing result of the sensing task requested by the sensing node query request may be determined based on a sensing result and/or a sensing measurement data of the sensing task that is being performed by the first network element.

When the SF, SF-C or SF-U that meets the first requirement is determined, the second network element may make a determination by using the information registered by the SF, SF-C or SF-U to the second network element. The information registered by the SF, SF-C or SF-U to the second network element may refer to the example shown in FIG. 5 above. For example, the second network element determines one or more SFs, SF-Cs or SF-Us that may meet the sensing task requirement based on the service area, sensing capability and other information registered by various SFs, SF-Cs or SF-Us, and the sensing task requirement carried in the received sensing node query request; and/or, the second network element determines which sensing results (or sensing measurement data) of the sensing tasks that have been performed completely by the SFs, SF-Cs or SF-Us and/or sensing results (or sensing measurement data) of the sensing tasks that are being performed by the SFs, SF-Cs or SF-Us may be reused based on the carried sensing task information registered by various SFs, SF-Cs or SF-Us (including the sensing information of the sensing task that has been performed completely and/or the sensing information of the sensing task that is being performed), that is, it is determined that which sensing results (or sensing measurement data) of the sensing tasks that are being performed by the SFs, SF-Cs or SF-Us and/or the sensing results (or sensing measurement data) of the sensing tasks that have been performed completely by the SFs, SF-Cs or SF-Us may be used to determine a sensing result of a currently requested sensing task. Through the above process, the second network element determines the SFs, SF-Cs or SF-Us that meet the current sensing task requirement and whose sensing results (or sensing measurement data) of the sensing tasks that are being performed and/or sensing results (or sensing measurement data) of the sensing tasks that have been performed completely may be reused, and then feeds back these SFs, SF-Cs or SF-Us to the fourth network element. If the sensing results (or sensing measurement data) of the sensing tasks that are being performed and/or the sensing tasks that have been performed completely by any one of SFs, SF-Cs or SF-Us registered in the second network element all cannot be reused, that is, the sensing result of the currently requested sensing task cannot be determined based on the sensing results (or sensing measurement data) of the sensing tasks that have been performed completely and/or the sensing results (or sensing measurement data) of the sensing tasks that are being performed by these SFs, SF-Cs or SF-Us, the second network element determines the SFs, SF-Cs or SF-Us that meet the current sensing task requirement, and then feeds back these SFs, SF-Cs or SF-Us to the fourth network element.

The second network element transmits identifiers and/or workloads of the determined one or more first network elements. For example, in the embodiment, the second network element transmits an SF query response to the fourth network element, and the SF query response carries the identifiers and/or workloads of the determined one or more SFs, SF-Cs, or SF-Us.

In S640, the fourth network element selects a first network element (e.g., an SF, an SF-C or an SF-U) from the information transmitted by the second network element. In a case where the second network element returns an identifier (e.g., an SF ID, an SF-C ID or an SF-U ID) of the first network element, the fourth network element transmits a sensing request message to the SF, SF-C or SF-U; in a case where the second network element returns identifiers (e.g., the SF IDs, SF-C IDs or SF-U IDs) of a plurality first network elements, the fourth network element may select an SF, SF-C or SF-U with the smallest workload from the plurality of SFs, SF-Cs or SF-Us, and transmit a sensing request message to the SF, SF-C or SF-U. The sensing request message may carry a sensing task requirement of the requested sensing task.

In S650, after the SF, SF-C or SF-U receives the sensing request message, if the sensing result (or sensing measurement data) of the sensing task that is being performed and/or the sensing task that has been performed completely by the SF, SF-C or SF-U may be reused, the SF, SF-C or SF-U may determine the sensing result of the sensing task requested by the sensing request message, by using the sensing result (or sensing measurement data) of the sensing task that has been performed completely and/or the sensing result (or sensing measurement data) of the sensing task that is being performed. As shown in FIG. 6, the SF, SF-C or SF-U determines whether a new sensing task needs to be initiated. For example, the SF, SF-C or SF-U determines whether the sensing result (or sensing measurement data) of the sensing task that is being performed and/or the sensing task that has been performed completely may be reused. If the sensing result may be reused, it means that there is no need to initiate a new sensing task. The SF, SF-C or SF-U may determine the sensing result of the currently requested sensing task, by using the sensing result (or sensing measurement data) of the sensing task that has been performed completely and/or the sensing result (or sensing measurement data) of the sensing task that is being performed. After the sensing result is determined, continue to perform step S670. If the sensing result cannot be reused, it means that a new sensing task needs to be initiated, and then continue to perform step S660.

In S660, the SF, SF-C or SF-U performs the sensing sub-process to determine the sensing result based on the mode specified by the sensing task consumer. If the sensing request message does not include a specified sensing mode, the SF, SF-C or SF-U may self-select a sensing mode to perform the sensing sub-process to determine the sensing result.

In S670, the SF, SF-C or SF-U feeds back a sensing response to the sensing task consumer, where the sensing response carries the sensing result.

In the example shown in FIG. 6, the sensing task consumer transmits a sensing request message to the fourth network element, and the fourth network element transmits a sensing node query request to the second network element based on the sensing request message. In some other implementations, the sensing task consumer may transmit a sensing request message to the second network element, that is, a second message may specifically be a sensing request message. The second network element receives the sensing request message from the sensing task consumer, and the sensing request message carries the sensing task requirement. Afterwards, the second network element may determine one or more first network elements (e.g., an SF, an SF-C or an SF-U) that meet the first requirement and determine workloads of the first network elements (e.g., an SF, an SF-C or an SF-U) that meet the first requirement based on the sensing task requirement carried in the sensing request message. The specific determination mode may refer to the related content in the above step S630, which will not be repeated herein. After one or more first network elements (e.g., an SF, an SF-C or an SF-U) that meet the first requirement are determined, the second network element may select a first network element (e.g., an SF, an SF-C or an SF-U) with the smallest workload from the one or more first network elements that meet the first requirement, and transmit a sensing request message to the first network element (e.g., an SF, an SF-C or an SF-U). The sensing request message may carry the sensing task requirement of the requested sensing task. After the first network element (e.g., an SF, an SF-C or an SF-U) receives the sensing request message, the sensing result of the currently requested sensing task may be determined based on the sensing result (or sensing measurement data) of the sensing task that has been performed completely and/or the sensing result (or sensing measurement data) of the sensing task that is being performed, or the sensing process is performed. The specific process may refer to the related content in the above steps S650-S670, which will not be repeated herein.

### Embodiment 2:

In the embodiment, a core network element or a sensing task consumer subscribes to a first network element for a sensing capability and/or carried sensing task information of the first network element. After a third network element (e.g., a core network element or a sensing task consumer) subscribes to the first network element for the sensing capability and/or the carried sensing task information of the first network element, in a case where a trigger condition is met, the first network element transmits a first message to the third network element. The first message may specifically be a sensing task information notification message. The sensing task information notification message may carry at least one of service area information of the first network element, sensing capability information of the first network element, or sensing task information carried by the first network element. The third network element includes a core network element or a sensing task consumer, where the core network element may include an AMF or an NEF, and the sensing task consumer may include an AF, a UE or an RAN device.

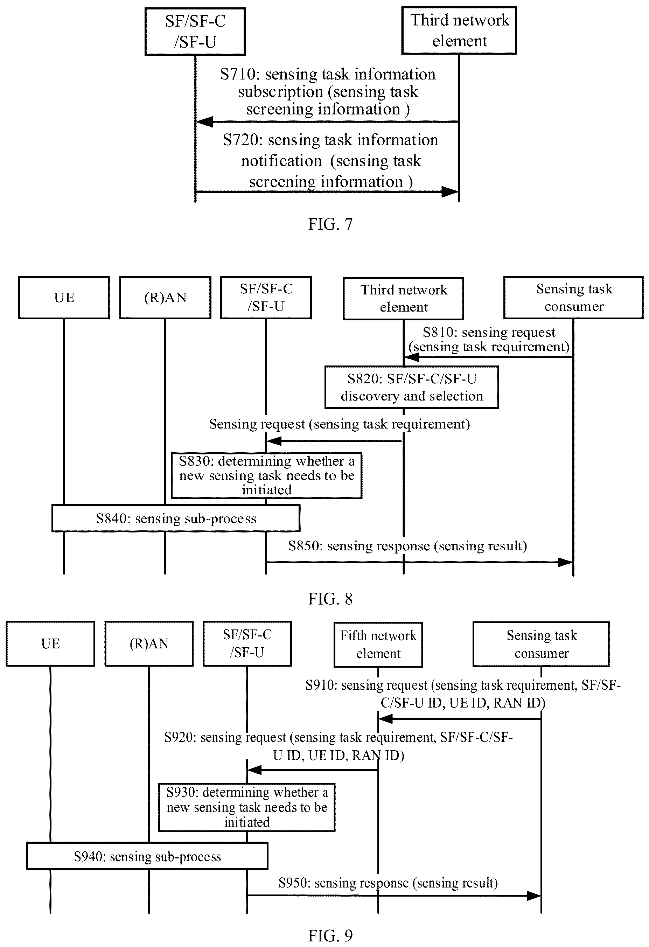

FIG. 7 is a flowchart of an implementation of subscription of an SF capability and carried sensing task information, in accordance with the embodiments of the present disclosure. In the embodiment, the description is given by considering an example in which the first network element is an SF. The first network element may also be other network elements (e.g., an SF-C or an SF-U). As shown in FIG. 7, the process includes the following steps.

In S710, the SF receives a sensing task information subscription message from a third network element, where the sensing task information subscription message may include sensing task screening information (or referred to as sensing task description information), the sensing task screening information is used to assist the SF to screen out a sensing task that needs to be notified to the third network element. The sensing task screening information (or referred to as sensing task description information) may include at least one of a sensing task identifier (ID), a sensing task type, a sensing task requirement, or a sensing mode.

In S720, the SF transmits a sensing task information notification message to the third network element, where the sensing task information notification message includes related information of the sensing task that meets the sensing task screening information (or referred to as sensing task description information), including at least one of service area information of the SF, sensing capability information of the SF, or sensing task information of the SF. Specifically, they may include the following.
(1) Service area information of the SF may include at least one of the following:
   a reference point coordinate and/or radius;
   at least one of reference point coordinate, area length, or area width;
   one or more zone identifiers, which are used to indicate geographical areas (e.g., Zone IDs); or
   3GPP internal area identifiers, such as Cell ID information and Tracking Area ID information.
(2) Sensing capability information of the SF may include at least one of the following:
   a type of sensing data that supports processing;
   a supported sensing scenarios, such as area-oriented and target-oriented;
   a supported sensing accuracy; or
   a supported sensing mode, such as autonomous transmission and reception by RAN, collaboration between RANs, collaboration between UE and RAN, autonomous transmission and reception by UE, or collaboration between UEs.
(3) The sensing task information carried by the SF, including sensing information of a sensing task that has been performed completely by the SF and/or the sensing information of a sensing task that is being performed by the SF. For example, the sensing information may include at least one of the following:
   a sensing task type, such as target tracking or weather measurement;
   sensing target information, such as sensing target area and sensing target object information;
   sensing result description information, such as precision, accuracy, data type of the sensing result;
   a mode of performing a sensing task, such as autonomous transmission and reception by RAN, collaboration between RANs, collaboration between UE and RAN, autonomous transmission and reception by UE, or collaboration between UEs;
   a sensing node involved in a sensing task, such as a UE ID or an RAN ID;
   a date and a duration for performing a sensing task; or
   a number of sensing tasks being performed.

For example, the sensing task screening information included in the sensing task information subscription message transmitted by the third network element to the SF requires subscribing for a sensing task that supports three sensing modes: autonomous transmission and reception by RAN, collaboration between RANs, or collaboration between UE and RAN. The SF determines whether the sensing mode supported by the SF and/or the sensing mode of the sensing task that has been performed completely or is being performed meets the aforementioned three sensing modes based on the sensing task screening information. If the sensing mode belongs to the three sensing modes, it means that a screening requirement in the sensing task screening information for the sensing mode is met. For other screening requirements in the sensing task screening information, a same method is used for determination. Finally, the SF carries the information of the sensing task that meets all the screening requirements in the sensing task screening information in the sensing task information notification message and transmits the sensing task information notification message to the third network element. If the SF cannot find the sensing task that meets the screening requirements in the sensing task screening information, the SF will not transmit the sensing task information notification message to the third network element.

In some implementations, in a case where the SF receives a sensing task request and/or the sensing task that is being performed meets the sensing task screening information, the SF may transmit the sensing task information notification message to the third network element.

The third network element may store task information in the received sensing task information notification message for use in subsequent selection of SF. For example, in a case where the sensing task consumer requests a sensing task, the third network element receives the sensing request message transmitted by the sensing task consumer, and selects a suitable SF to perform the sensing task by using the capabilities and the carried sensing task information of various SFs.

FIG. 8 is a flowchart of an implementation of SF discovery and selection based on subscription of sensing task information, in accordance with the embodiments of the present disclosure. In the embodiment, the description is given by considering an example in which the first network element is an SF and the sensing task consumer initiates a sensing request message to the third network element. The first network element may also be other network elements (e.g., a whole composed of SF-C and SF-U, an SF-C, or an SF-U). Before the SF discovery and selection process shown in FIG. 8, the third network element may pre-store the SF capabilities and the carried sensing task information of a plurality of SFs. For example, the third network element pre-subscribes to various SFs for the capabilities and carried sensing task information by using the process shown in FIG. 7.

As shown in FIG. 8, the SF discovery and selection process includes the following steps.

In S810, the sensing task consumer transmits a sensing request message to the third network element, where the sensing request message carries the sensing task requirement of the requested sensing task. For example, the sensing task requirement may include at least one of a sensing task type, sensing target information, sensing node information, a sensing mode, a sensing data type, a sensing accuracy, a sensing resolution, a frame rate, a duration, a delay or sensing target area information.

For example, in some implementations, the sensing request message includes at least one of the following information:
(1) a sensing task type, such as target tracking or weather measurement;
(2) a task requirement, such as at least one of the following: a sensing resolution, a sensing accuracy, a frame rate, a duration, sensing target area information, a delay, or sensing target information (e.g., vehicle type, vehicle identifier, or location information);
(3) specified sensing node information, such as UE identifier information or RAN identifier information; or
(4) a specified sensing mode, such as autonomous transmission and reception by RAN, collaboration between RANs, collaboration between UE and RAN, autonomous transmission and reception by UE, or collaboration between UEs.

In S820, after the third network element receives the sensing request message, the third network element may first query the locally stored sensing task information carried by the SF, SF-C or SF-U. The locally stored sensing task information carried by the SF, SF-C or SF-U may be subscribed from various SFs, SF-Cs or SF-Us. The specific subscription mode may refer to the implementation shown in FIG. 7, or other modes may be used to obtain the sensing task information carried by the SF, SF-C or SF-U. If there is an SF corresponding to the locally stored sensing task information matching the sensing task requirement (carried in the sensing request message), the third network element may select the SF, SF-C or SF-U to perform the sensing task. If there is no SF, SF-C or SF-U corresponding to the locally stored sensing task information matching the sensing task requirement (carried in the sensing request message), the third network element may query other network elements that store sensing task information of the SF, SF-C or SF-U. For example, the third network element may query a network element (e.g., an NRF). The specific query mode may refer to the mode in which the fourth network element queries the second network element in the example shown in FIG. 6, or other query modes may be used.

The mode in which the third network element queries based on the local information may include that the third network element may determine one or more first network elements (e.g., an SF, an SF-C or an SF-U) that meet a first requirement and determine workloads of the first network element (e.g., an SF) that meets the first requirement based on the sensing task requirement carried in the sensing request message. The workload may refer to the number of sensing tasks being performed by the first network element (e.g., an SF, an SF-C or an SF-U).

The first requirement may include at least one of the following:
that the sensing task requirement carried in the sensing request message is met;
that a sensing result of a sensing task requested by the sensing request message may be determined based on a sensing result and/or a sensing measurement data of the sensing task that has been performed completely by the first network element; or
that the sensing result of the sensing task requested by the sensing request message may be determined based on a sensing result and/or a sensing measurement data of the sensing task that is being performed by the first network element.

When the SF, SF-C or SF-U that meets the first requirement is determined, the third network element may make a determination by using the pre-subscribed sensing task information carried by the SF, SF-C or SF-U. For example, the third network element determines one or more SFs, SF-Cs or SF-Us that may meet the sensing task requirement based on the locally stored service area, sensing capabilities and other information of various SFs, SF-Cs or SF-Us, as well as the sensing task requirement carried in the received sensing request message; and/or, the third network element determines which sensing results (or sensing measurement data) of the sensing tasks that have been performed completely and/or sensing results (or sensing measurement data) of the sensing tasks that are being performed by the SFs, SF-Cs or SF-Us may be reused based on the locally stored sensing task information (including the sensing information of the sensing tasks that have been performed completely and/or the sensing information of the sensing tasks that are being performed) carried by various SFs, SF-Cs or SF-Us, that is, it is determined that which sensing results (or sensing measurement data) of the sensing tasks that are being performed and/or the sensing results (or sensing measurement data) of the sensing tasks that have been performed completely by the SFs, SF-Cs or SF-Us may be used to determine a sensing result of a currently requested sensing task. Through the above process, if the third network element determines the SFs, SF-Cs or SF-Us that meet the current sensing task requirements and whose sensing results (or sensing measurement data) of the sensing tasks that are being performed and/or the sensing tasks that have been performed completely may be reused, the third network element may select an SF, SF-C or SF-U with the smallest workload from the SFs, SF-Cs or SF-Us, and transmits a sensing request message to the SF, SF-C or SF-U. The sensing request message may carry the sensing task requirement, and the sensing task is performed by the SF, SF-C or SF-U. Alternatively, if the third network element determines SFs, SF-Cs or SF-Us that meet the current sensing task requirement, but sensing results (or sensing measurement data) of sensing tasks that are being performed and/or the sensing tasks that have been performed completely by the SFs, SF-C or SF-U all cannot be reused, the third network element may select an SF, SF-C or SF-U with the smallest workload from these SFs, and transmit a sensing request message to the SF, SF-C or SF-U. Alternatively, the third network element may also query other network elements to find SFs, SF-Cs or SF-Us that meet the current sensing task requirements and whose sensing results (or sensing measurement data) of the sensing tasks that are being performed and/or the sensing tasks that have been performed completely may be reused, and transmit a sensing request message to the SFs, SF-Cs or SF-Us.

In S830, after the SF, SF-C or SF-U receives the sensing request message, if the sensing result (or sensing measurement data) of the sensing task that is being performed and/or the sensing task that has been performed completely by the SF, SF-C or SF-U may be reused, the SF, SF-C or SF-U may determine the sensing result of the sensing task requested by the sensing request message, by using the sensing result (or sensing measurement data) of the sensing task that has been performed completely and/or the sensing result (or sensing measurement data) of the sensing task that is being performed. As shown in FIG. 8, the SF, SF-C or SF-U determines whether a new sensing task needs to be initiated. For example, the SF, SF-C or SF-U determines whether the sensing result (or sensing measurement data) of the sensing task that is being performed and/or the sensing task that has been performed completely may be reused. If the sensing result may be reused, it means that there is no need to initiate a new sensing task. The SF, SF-C or SF-U may determine the sensing result of the currently requested sensing task, by using the sensing result (or sensing measurement data) of the sensing task that has been performed completely and/or the sensing result (or sensing measurement data) of the sensing task that is being performed. After the sensing result is determined, continue to perform step S850. If the sensing result cannot be reused, it means that a new sensing task needs to be initiated, and then continue to perform step S840.

In S840, the SF, SF-C or SF-U performs the sensing sub-process to determine the sensing result based on the method specified by the sensing task consumer. If the sensing request message does not include a specified sensing mode, the SF, SF-C or SF-U may self-select a sensing mode to perform the sensing sub-process to determine the sensing result.

In S850, the SF, SF-C or SF-U feeds back a sensing response to the sensing task consumer, where the sensing response carries the sensing result.

In some implementations, a sensing task consumer (e.g., a UE or an AF) or a core network element transmits a sensing request message, where the sensing request message carries at least one of a sensing task requirement, a sensing control network element identifier, or a sensing task execution node identifier of a sensing task. The sensing task requirement may include at least one of a sensing task type, sensing target information, sensing node information, a sensing mode, a sensing data type, a sensing accuracy, a sensing resolution, a frame rate, a duration, a delay or sensing target area information. The sensing control network element identifier may include an SF ID, an SF-C ID or an SF-U ID. The sensing control network element identifier (i.e., SF ID, SF-C ID or SF-U ID) may be a system internal ID of the fifth generation mobile communication system (5GS, 5G System), a system external ID of the 5G system, or may also be a group ID, or may also be a group of IDs. The group of IDs may include a plurality of SF IDs, or may include a plurality of SF-C IDs, or may include a plurality of SF-U IDs, or may include a combination of any two or three of the SF ID, SF-C ID and SF-U ID.

The sensing task execution node identifier may include a UE ID or an RAN ID for performing the sensing measurement.

### Embodiment 3:

In the embodiment, the description is given by considering an example in which a sensing task consumer transmits a sensing request message to a fifth network element, where the sensing request message carries a sensing task requirement and/or an SF ID. FIG. 9 is a flowchart of an implementation of specifying an SF by a sensing task consumer, in accordance with the embodiments of the present disclosure, and the process includes the following steps.

In S910, the sensing task consumer transmits a sensing request message to the fifth network element, where the sensing request message carries at least one of a sensing task requirement, a sensing control network element identifier, or a sensing task execution node identifier. The sensing task requirements may include at least one of a sensing task type, sensing target information, sensing node information, a sensing mode, a sensing data type, a sensing accuracy, a sensing resolution, a frame rate, a duration, a delay or sensing target area information. The fifth network element may be a core network element (e.g., an AMF or an NEF). The sensing control network element identifier carried in the sensing request message may be an SF ID, an SF-C ID or an SF-U ID. The SF ID, SF-C ID or SF-U ID may specifically be a 5GS internal ID, or may be a 5GS external ID, or may be a group ID or may be a group of IDs. The group of IDs may include a plurality of SF IDs, or may include a plurality of SF-C IDs, or may include a plurality of SF-U IDs, or may include a combination of any two or three of the SF ID, SF-C ID and SF-U ID. The sensing task execution node identifier may include a UE ID or an RAN ID for performing the sensing task. For example, if the sensing task consumer has ever initiated a sensing task to be performed by SF 1, or the sensing task consumer has been controlled by SF 1 and has performed a sensing task, or the sensing task consumer has subscribed to information of SF 1, in these cases, it may be more suitable for SF 1 to control the sensing task requested by the sensing task consumer, and the sensing request message transmitted by the sensing task consumer may carry the identifier of SF 1 to select SF 1 to perform the sensing request.

In S920, the fifth network element selects the corresponding SF, SF-C or SF-U based on a sensing control network element identifier provided by the sensing task consumer, and transmits a sensing request message to the SF, SF-C or SF-U. The sensing request message may carry a sensing task requirement and/or SF ID, SF-C ID or SF-U ID; and may also carry a sensing task execution node identifier (e.g., a UE ID or an RAN ID).

In S930, after the SF, SF-C or SF-U receives the sensing request message, if the sensing result of the sensing task that is being performed and/or the sensing task that has been performed completely by the SF, SF-C or SF-U may be reused, the SF, SF-C or SF-U may determine the sensing result of the sensing task requested by the sensing request message, by using the sensing result of the sensing task that has been performed completely and/or the sensing result of the sensing task that is being performed. As shown in FIG. 9, the SF, SF-C or SF-U determines whether a new sensing task needs to be initiated. For example, the SF, SF-C or SF-U determines whether the sensing result of the sensing task that is being performed and/or the sensing task that has been performed completely may be reused. If the sensing result may be reused, it means that there is no need to initiate a new sensing task. The SF, SF-C or SF-U may determine the sensing result of the currently requested sensing task, by using the sensing result of the sensing task that has been performed completely and/or the sensing result of the sensing task that is being performed. After the sensing result is determined, continue to perform step S950. If the sensing result cannot be reused, it means that a new sensing task needs to be initiated, and then continue to perform step S940.

In S940, the SF, SF-C or SF-U performs the sensing sub-process to determine the sensing result based on the method specified by the sensing task consumer. If the sensing request message does not include a specified sensing mode, the SF, SF-C or SF-U may self-select a sensing mode to perform the sensing sub-process to determine the sensing result.

In S950, the SF, SF-C or SF-U feeds back a sensing response to the sensing task consumer, where the sensing response carries the sensing result.

A plurality of embodiments of the present disclosure are not independent of each other, but may be combined with each other. Implementations in different embodiments may be reasonably combined and will not be listed one by one herein.

The methods provided in the embodiments of the present disclosure may enable similar or identical sensing tasks to be performed by a same SF as much as possible, thereby avoiding resource waste caused by a plurality of SFs performing a same sensing task. For example, a target area of sensing task A includes a target area of sensing task B, and types of the two sensing tasks are same. Then, the sensing data collected by sensing task A or the sensing result of sensing task A may be directly used by selecting an SF, SF-C or SF-U that has performed sensing task A, or an SF, SF-C or SF-U that is currently performing sensing task A to perform sensing task B, thereby improving resource utilization.

In addition, the sensing task consumer may avoid the problem of mismatch between the selected SF, SF-C or SF-U and the sensing mode of the requested sensing task, by carrying the sensing mode that matches the sensing task in the sensing request message as one of the selection criteria of SF, SF-C or SF-U, thereby reducing the probability of repeated triggering of the sensing request and reducing additional signaling consumption and user waiting delay.

Based on the above implementations, the present disclosure further provides several communication methods. The details are as follows.

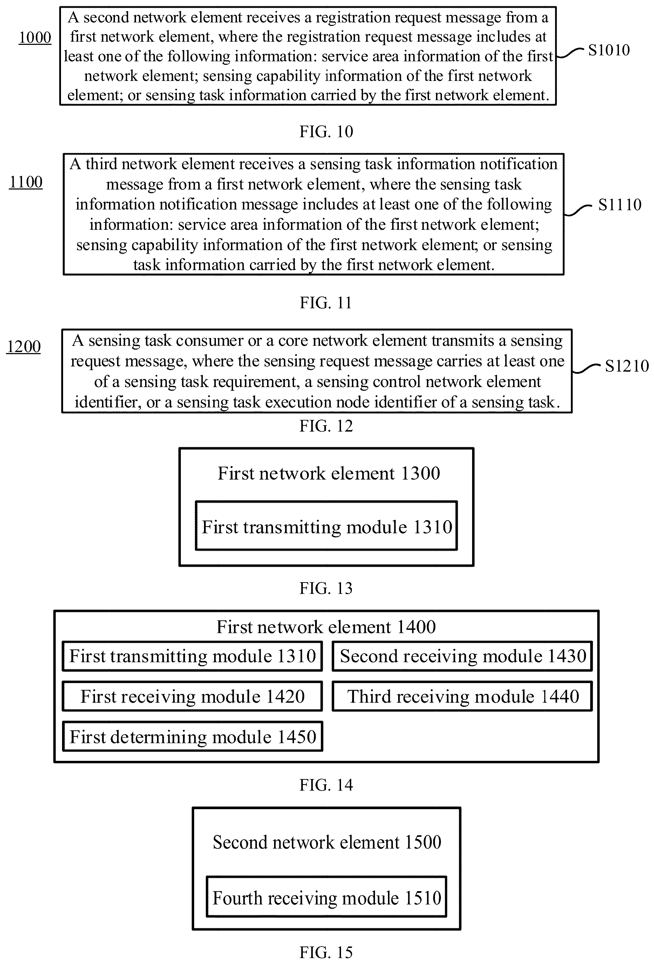

A communication method is provided in the embodiments of the present disclosure. FIG. 10 is a schematic flowchart of a communication method 1000, in accordance with the embodiments of the present disclosure. The method may be applied to the system shown in FIG. 1 or FIG. 2, but is not limited thereto. The method includes at least part of the following.

In S1010, a second network element receives a registration request message from a first network element, where the registration request message includes at least one of the following information:
service area information of the first network element;
sensing capability information of the first network element; or
sensing task information carried by the first network element.

In some implementations, the sensing capability information includes at least one of the following:
a type of sensing data that supports processing;
a supported sensing scenario;
a supported sensing accuracy; or
a supported sensing mode.

In some implementations, the sensing task information carried by the first network element includes:
sensing information of a sensing task that has been performed completely by the first network element; and/or
sensing information of a sensing task that is being performed by the first network element.

In some implementations, the sensing information includes at least one of the following:
a sensing task type;
sensing target information;
sensing result description information;
a mode of performing a sensing task;
a sensing node involved in a sensing task;
time information for performing a sensing task; or
a number of sensing tasks being performed.

In some implementations, the method further includes that the second network element transmits a registration response message to the first network element.

In some implementations, the method further includes that the second network element receives a second message, where the second message carries a sensing task requirement.

In some implementations, the sensing task requirement includes at least one of:
a sensing task type, sensing target information, sensing node information, a sensing mode, a sensing data type, a sensing accuracy, a sensing resolution, a frame rate, a duration, a delay or sensing target area information.

In some implementations, the method further includes that the second message also includes a sensing node query request, and the second network element receives the second message from a fourth network element.

In some implementations, the method further includes:
that the second network element determines one or more first network elements that meet a first requirement based on the sensing task requirement included in the second message;
that the second network element transmits the identifiers and/or workloads of the one or more first network elements;
where the first requirement includes at least one of the following:
   that the sensing task requirement is met;
   that a sensing result of a sensing task requested by the sensing node query request may be determined based on a sensing result and/or a sensing measurement data of the sensing task that has been performed completely by the first network element; or
   that the sensing result of the sensing task requested by the sensing node query request may be determined based on a sensing result and/or a sensing measurement data of the sensing task that is being performed by the first network element.

In some implementations, the workloads include a number of sensing tasks being performed by the first network element.

In some implementations, the fourth network element includes an AMF or an NEF.

In some implementations, the first network element includes an SF, an SF-C, or an SF-U.

In some implementations, the second network element includes a core network element or an AF.

In some implementations, the core network element includes an NRF, an NEF, a UDM or a UDR.

A communication method is provided in the embodiments of the present disclosure. FIG. 11 is a schematic flowchart of a communication method 1100, in accordance with the embodiments of the present disclosure. The method may be applied to the system shown in FIG. 1 or FIG. 2, but is not limited thereto. The method includes at least part of the following.

In S1110, a third network element receives a sensing task information notification message from a first network element, where the sensing task information notification message includes at least one of the following information:
service area information of the first network element;
sensing capability information of the first network element; or
sensing task information carried by the first network element.

In some implementations, the sensing capability information includes at least one of the following:
a type of sensing data that supports processing;
a supported sensing scenario;
a supported sensing accuracy; or
a supported sensing mode.

In some implementations, the sensing task information carried by the first network element includes:
sensing information of a sensing task that has been performed completely by the first network element; and/or
sensing information of a sensing task that is being performed by the first network element.

In some implementations, the sensing information includes at least one of the following:
a sensing task type;
sensing target information;
sensing result description information;
a mode of performing a sensing task;
a sensing node involved in a sensing task;
time information for performing a sensing task; or
a number of sensing tasks being performed.

In some implementations, before the third network element receives the sensing task information notification message from the first network element, the method further includes:
that the third network element transmits a sensing task information subscription message to the first network element, where the sensing task information subscription message includes sensing task screening information.

In some implementations, the sensing task screening information includes at least one of a sensing task identifier, a sensing task type, a sensing task requirement, or a sensing mode.

In some implementations, the information included in the sensing task information notification message meets the sensing task screening information.

In some implementations, the method further includes:
that the third network element receives a sensing request message, where the sensing request message carries at least one of a sensing task requirement, a sensing control network element identifier, or a sensing task execution node identifier of the sensing task.

In some implementations, the method further includes:
that the third network element determines a first network element that meets the sensing request message based on the information in the sensing task information notification message; and
that the third network element transmits a sensing request to a determined first network element.

In some implementations, the sensing request carries the sensing task requirements of the sensing task.

In some implementations, the sensing task requirement of the sensing task includes at least one of:
a sensing task type, sensing target information, a sensing mode, a sensing data type, a sensing accuracy, a sensing resolution, a frame rate, a duration, a delay or sensing area of the sensing task.

In some implementations, the third network element receives the sensing request message from a sensing task consumer or a core network element.

In some implementations, the sensing task consumer includes a UE, an AF, or an RAN device.

In some implementations, the third network element includes an AMF or an NEF.

In some implementations, the first network element includes an SF, an SF-C, or an SF-U.

A communication method is provided in the embodiments of the present disclosure. FIG. 12 is a schematic flowchart of a communication method 1200, in accordance with the embodiments of the present disclosure. The method may be applied to the system shown in FIG. 1 or FIG. 2, but is not limited thereto. The method includes at least part of the following.

In S1210, a sensing task consumer or a core network element transmits a sensing request message, where the sensing request message carries at least one of a sensing task requirement, a sensing control network element identifier, or a sensing task execution node identifier of a sensing task.

In some implementations, the sensing task requirement of the sensing task includes at least one of:
a sensing task type, sensing target information, sensing node information, a sensing mode, a sensing data type, a sensing accuracy, a sensing resolution, a frame rate, a duration, a delay or sensing target area information of the sensing task.

In some implementations, the sensing task execution node identifier includes a UE ID or an RAN ID for performing a sensing measurement.

In some implementations, the sensing control network element identifier includes an SF ID, an SF-C ID, or an SF-U ID.

In some implementations, the sensing control network element identifier includes: a system internal ID, a system external ID, a group ID, or a group of IDs. The group of IDs may include a plurality of SF IDs, or may include a plurality of SF-C IDs, or may include a plurality of SF-U IDs, or may include a combination of any two or three of the SF ID, SF-C ID and SF-U ID.

A first network element is further provided in the embodiments of the present disclosure. FIG. 13 is a schematic structural diagram of a first network element 1300, in accordance with the embodiments of the present disclosure, and the first network element 1300 includes:
a first transmitting module 1310, configured to transmit a first message, where the first message includes at least one of the following information:
service area information of the first network element;
sensing capability information of the first network element; or
sensing task information carried by the first network element.

In some implementations, the sensing capability information includes at least one of the following:
a type of sensing data that supports processing;
a supported sensing scenario;
a supported sensing accuracy; or
a supported sensing mode.

In some implementations, the sensing task information carried by the first network element includes:
sensing information of a sensing task that has been performed completely by the first network element; and/or
sensing information of a sensing task that is being performed by the first network element.

In some implementations, the sensing information includes at least one of the following:
a sensing task type;
sensing target information;
sensing result description information;
a mode of performing a sensing task;
a sensing node involved in a sensing task;
time information for performing a sensing task; or
a number of sensing tasks being performed.

In some implementations, the first message includes a registration request message, and the first transmitting module 1310 is configured to transmit the registration request message to the second network element.

FIG. 14 is a schematic structural diagram of a first network element 1400, in accordance with the embodiments of the present disclosure. The first network element 1400 includes one or more characteristics of the embodiments of the first network element 1300. In a possible implementation, in the embodiments of the present disclosure, the first network element 1400 further includes:
a first receiving module 1420, configured to receive a registration response message from the second network element.

In some implementations, the second network element includes a core network element or an AF.

In some implementations, the core network element includes an NRF, an NEF, a UDM or a UDR.

In some implementations, the first message includes a sensing task information notification message, and the first transmitting module 1310 is configured to transmit the sensing task information notification message to a third network element.

In some implementations, the first transmitting module 1310 is configured to:
transmit the first message in a case where a sensing task request is received and/or the sensing task that is being performed meets the sensing task screening information.

In some implementations, the first network element 1400 further includes:
a second receiving module 1430, configured to receive a sensing task information subscription message from the third network element, where the sensing task information subscription message includes the sensing task screening information.

In some implementations, the sensing task screening information includes at least one of a sensing task identifier, a sensing task type, a sensing task requirement, or a sensing mode.

In some implementations, the third network element includes a core network element or a sensing task consumer.

In some implementations, the core network element includes an AMF or an NEF.

In some implementations, the sensing task consumer includes an AF, a UE, or an RAN device.

In some implementations, the first network element 1400 further includes:
a third receiving module 1440, configured to receive a sensing request message, where the sensing request message carries a sensing task requirement of a requested sensing task; and
a first determining module 1450, configured to determine a sensing result of the requested sensing task by using the sensing result of the sensing task that has been performed completely and/or the sensing result of the sensing task that is being performed.

In some implementations, the sensing task requirement of the requested sensing task includes at least one of:
a sensing task type, sensing target information, sensing node information, a sensing mode, a sensing data type, a sensing accuracy, a sensing resolution, a frame rate, a duration, a delay or sensing target area information of the requested sensing task.

In some implementations, the first network element includes an SF, an SF-U, or an SF-C.

It should be understood that the above and other operations and/or functions of the modules in the first network element according to the embodiments of the present disclosure are used to implement the corresponding processes of the first network element in method 400 of FIG. 4, which will not be repeated herein for the sake of brevity.

A second network element is further provided in the embodiments of the present disclosure. FIG. 15 is a schematic structural diagram of a second network element 1500, in accordance with the embodiments of the present disclosure, and the second network element 1500 includes:
a fourth receiving module 1510, configured to receive a registration request message from a first network element, where the registration request message includes at least one of the following information:
service area information of the first network element;
sensing capability information of the first network element; or
sensing task information carried by the first network element.

In some implementations, the sensing capability information includes at least one of the following:
a type of sensing data that supports processing;
a supported sensing scenario;
a supported sensing accuracy; or
a supported sensing mode.

In some implementations, the sensing task information carried by the first network element includes:
sensing information of a sensing task that has been performed completely by the first network element; and/or
sensing information of a sensing task that is being performed by the first network element.

In some implementations, the sensing information includes at least one of the following:
a sensing task type;
sensing target information;
sensing result description information;
a mode of performing a sensing task;
a sensing node involved in a sensing task;
time information for performing a sensing task; or
a number of sensing tasks being performed.

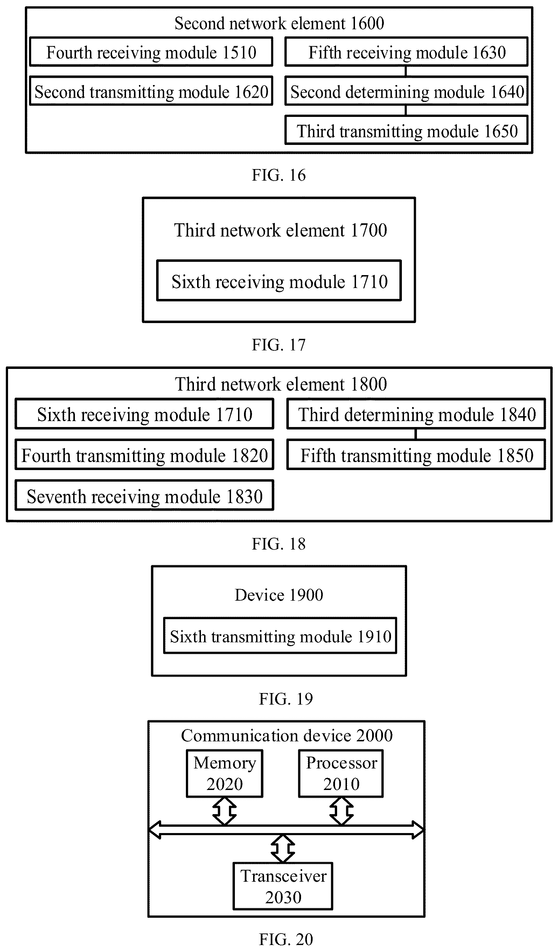

FIG. 16 is a schematic structural diagram of a second network element 1600, in accordance with the embodiments of the present disclosure. The second network element 1600 includes one or more characteristics of the embodiments of the second network element 1500. In a possible implementation, in the embodiments of the present disclosure, the second network element 1600 further includes:
a second transmitting module 1620, configured to transmit a registration response message to the first network element.

In some implementations, the second network element 1600 further includes:
a fifth receiving module 1630, configured to receive a second message, where the second message carries a sensing task requirement.

In some implementations, the sensing task requirement includes at least one of:
a sensing task type, sensing target information, sensing node information, a sensing mode, a sensing data type, a sensing accuracy, a sensing resolution, a frame rate, a duration, a delay or sensing target area information.

In some implementations, the second message includes a sensing node query request, and the fifth receiving module 1630 is configured to receive the second message from a fourth network element.

In some implementations, the second network element 1600 further includes:
a second determining module 1640, configured to determine one or more first network elements that meet a first requirement based on the sensing task requirement included in the second message; and
a third transmitting module 1650, configured to transmit identifiers and/or workloads of the one or more first network elements;
where the first requirement includes at least one of the following:
   that the sensing task requirement is met;
   that a sensing result of a sensing task requested by the sensing node query request may be determined based on the sensing result and/or a sensing measurement data of the sensing task that has been performed completely by the first network element; or
   that the sensing result of the sensing task requested by the sensing node query request may be determined based on the sensing result and/or a sensing measurement data of the sensing task that is being performed by the first network element.

In some implementations, the workloads include a number of sensing tasks being performed by the first network element.

In some implementations, the fourth network element includes an AMF or an NEF.

In some implementations, the first network element includes an SF, an SF-C, or an SF-U.

In some implementations, the second network element includes a core network element or an AF.

In some implementations, the core network element includes an NRF, an NEF, a UDM or a UDR.

It should be understood that the above and other operations and/or functions of the module in the second network element according to the embodiments of the present disclosure are used to implement the corresponding processes of the second network element in method 1000 of FIG. 10, which will not be repeated herein for the sake of brevity.

A third network element is further provided in the embodiments of the present disclosure. FIG. 17 is a schematic structural diagram of a third network element 1700, in accordance with the embodiments of the present disclosure, and the third network element 1700 includes:
a sixth receiving module 1710, configured to receive a sensing task information notification message, where the sensing task information notification message includes at least one of the following information:
service area information of a first network element;
sensing capability information of the first network element; or
sensing task information carried by the first network element.

In some implementations, the sensing capability information includes at least one of the following:
a type of sensing data that supports processing;
a supported sensing scenario;
a supported sensing accuracy; or
a supported sensing mode.

In some implementations, the sensing task information carried by the first network element includes:
sensing information of a sensing task that has been performed completely by the first network element; and/or
sensing information of a sensing task that is being performed by the first network element.

In some implementations, the sensing information includes at least one of the following:
a sensing task type;
sensing target information;
sensing result description information;
a mode of performing a sensing task;
a sensing node involved in a sensing task;
time information for performing a sensing task; or
a number of sensing tasks being performed.

FIG. 18 is a schematic structural diagram of a third network element 1800, in accordance with the embodiments of the present disclosure. The third network element 1800 includes one or more characteristics of the embodiments of the third network element 1700. In a possible implementation, in the embodiments of the present disclosure, before the sixth receiving module 1710, the third network element 1800 further includes:
a fourth transmitting module 1820, configured to transmit a sensing task information subscription message to the first network element, where the sensing task information subscription message includes sensing task screening information.

In some implementations, the sensing task screening information includes at least one of a sensing task identifier, a sensing task type, a sensing task requirement, or a sensing mode.

In some implementations, the information included in the sensing task information notification message meets the sensing task screening information.

In some implementations, the third network element 1800 further includes:
a seventh receiving module 1830, configured to receive a sensing request message, where the sensing request message carries at least one of a sensing task requirement, a sensing control network element identifier, or a sensing task execution node identifier of a sensing task.

In some implementations, the third network element 1800 further includes:
a third determining module 1840, configured to determine a first network element that meets the sensing request message based on the information in the sensing task information notification message; and
a fifth transmitting module 1850, configured to transmit a sensing request to a determined first network element.

In some implementations, the sensing request carries the sensing task requirements of the sensing task.

In some implementations, the sensing task requirement of the sensing task includes at least one of:
a sensing task type, sensing target information, a sensing mode, a sensing data type, a sensing accuracy, a sensing resolution, a frame rate, a duration, a delay or sensing area of the sensing task.

In some implementations, the third network element receives the sensing request message from a sensing task consumer or a core network element.

In some implementations, the sensing task consumer includes a UE, an AF, or an RAN device.

In some implementations, the third network element includes an AMF or an NEF.

In some implementations, the first network element includes an SF, an SF-C, or an SF-U.

It should be understood that the above and other operations and/or functions of the module in the third network element according to the embodiments of the present disclosure are used to implement the corresponding processes of the third network element in method 1100 of FIG. 11, which will not be repeated herein for the sake of brevity.

A device is further provided in the embodiments of the present disclosure. FIG. 19 is a schematic structural diagram of a device 1900, in accordance with the embodiments of the present disclosure, and the device 1900 includes:
a sixth transmitting module 1910, configured to transmit a sensing request message, where the sensing request message carries at least one of a sensing task requirement, a sensing control network element identifier or a sensing task execution node identifier of a sensing task.

In some implementations, the sensing task requirement of the sensing task includes at least one of:
a sensing task type, sensing target information, sensing node information, a sensing mode, a sensing data type, a sensing accuracy, a sensing resolution, a frame rate, a duration, a delay or sensing target area information of the sensing task.

In some implementations, the sensing control network element identifier includes an SF ID, an SF-C ID, or an SF-U ID.

In some implementations, the sensing control network element identifier includes: a system internal ID, a system external ID, a group ID, or a group of IDs. The group of IDs may include a plurality of SF IDs, or may include a plurality of SF-C IDs, or may include a plurality of SF-U IDs, or may include a combination of any two or three of the SF ID, SF-C ID and SF-U ID.

In some implementations, the sensing task execution node identifier includes a UE ID or an RAN ID for performing the sensing measurement.

It should be understood that the above and other operations and/or functions of the modules in the device according to the embodiments of the present disclosure are used to implement the corresponding processes of the device in method 1200 of FIG. 12, which will not be repeated herein for the sake of brevity.

It should be noted that the described functions of the various modules (sub-modules, units or components, etc.) in the communication device in the embodiments of the present disclosure may be implemented by different modules (sub-modules, units or components, etc.) or may be implemented by a same module (a sub-module, a unit or a component, etc.). For example, the first receiving module and the second receiving module may be different modules or a same module, and both may implement the corresponding functions in the embodiments of the present disclosure. In addition, the transmitting modules and the receiving modules in the embodiments of the present disclosure may be implemented by transceivers of the device, and some or all of the remaining modules may be implemented by processors of the device.

FIG. 20 is a schematic structural diagram of a communication device 2000, in accordance with the embodiments of the present disclosure. The communication device 2000 shown in FIG. 20 includes a processor 2010. The processor 2010 may call and run a computer program from a memory, so as to implement the methods in the embodiments of the present disclosure.

In some implementations, as shown in FIG. 20, the communication device 2000 may further include a memory 2020. The processor 2010 may call and run a computer program from the memory 2020, so as to implement the communication device in the embodiments of the present disclosure.

The memory 2020 may be a separate component independent of the processor 2010, or may be integrated into the processor 2010.

In some implementations, as shown in FIG. 20, the communication device 2000 may further include a transceiver 2030. The processor 2010 may control the transceiver 2030 to communicate with other devices, specifically, the transceiver 2030 may transmit information or data to other devices, or receive information or data transmitted by other devices.

The transceiver 2030 may include a transmitter and a receiver. The transceiver 2030 may further include antenna(s), and the number of the antenna(s) may be one or more.

In some implementations, the communication device 2000 may be a communication device in the embodiments of the present disclosure, and the communication device 2000 may implement the corresponding processes implemented by the communication device in various methods of the embodiment of the present disclosure, which will not be repeated herein for the sake of brevity.

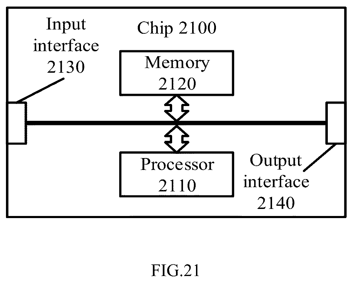

FIG. 21 is a schematic structural diagram of a chip 2100, in accordance with the embodiments of the present disclosure. The chip 2100 shown in FIG. 21 includes a processor 2110. The processor 2110 may call and run a computer program from a memory, so as to implement the methods in the embodiments of the present disclosure.

In some implementations, as shown in FIG. 21, the chip 2100 may further include a memory 2120. The processor 2110 may call and run a computer program from the memory 2120, so as to implement the methods in the embodiments of the present disclosure.

The memory 2120 may be a separate component independent of the processor 2110, or may be integrated into the processor 2110.

In some implementations, the chip 2100 may further include an input interface 2130. The processor 2110 may control the input interface 2130 to communicate with other devices or chips, and specifically, the input interface 2130 may obtain information or data transmitted by other devices or chips.

In some implementations, the chip 2100 may further include an output interface 2140. The processor 2110 may control the output interface 2140 to communicate with other devices or chips, and specifically, the output interface 2140 may output information or data to other devices or chips.

In some implementations, the chip may be applied to the communication device in the embodiments of the present disclosure, and the chip may implement the corresponding processes implemented by the network device in various methods of the embodiments of the present disclosure, which will not be repeated herein for the sake of brevity.

It should be understood that the chip mentioned in the embodiments of the present disclosure may also be referred as a system-level chip, a system chip, a chip system or a system on chip, etc.

The above-mentioned processor may be a general-purpose processor, a digital signal processor (DSP), a field programmable gate array (FPGA), an application specific integrated circuit (ASIC) or other programmable logic devices, other transistor logic devices, other discrete hardware components. The general-purpose processor may be a microprocessor, or may be any conventional processor or the like.

The above-mentioned memory may be a volatile memory or a non-volatile memory, or may include both volatile and nonvolatile memories. The non-volatile memory may be a read-only memory (ROM), a programmable ROM (PROM), an erasable PROM (EPROM), an electrically EPROM (EEPROM) or a flash memory. The volatile memory may be a random access memory (RAM).

It should be understood that the above-mentioned memories are exemplary but not restrictive. For example, the memories in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (synch link DRAM, SLDRAM) and a direct memory bus random access memory (Direct Rambus RAM, DR RAM), etc. That is to say, the memories in the embodiments of the present disclosure are intended to include but are not limited to these and any other suitable types of memories.

The above embodiments may be implemented in whole or in part by software, hardware, firmware or any combination thereof. In a case where the above embodiments are implemented by using software, they may be implemented in the form of a computer program product in whole or in part. The computer program product includes one or more computer instructions. When the computer program instructions are loaded and executed on a computer, processes or functions according to the embodiments of the present disclosure are generated in whole or in part. The computer may be a general-purpose computer, a dedicated computer, a computer network, or any other programmable apparatuses. The computer instructions may be stored in a computer-readable storage medium or transmitted from one computer-readable storage medium to another computer-readable storage medium, for example, the computer instructions may be transmitted from one website, computer, server, or data center to another website, computer, server, or data center via wired (e.g., coaxial cable, optical fiber, digital subscriber line (DSL)) or wireless (e.g., infrared, wireless, or microwave) means. The computer-readable storage medium may be any available medium that may be accessed by a computer, or a data storage device, such as including a server or a data center that integrates one or more available media. The available medium may be a magnetic medium (e.g., a floppy disk, a hard disk, a magnetic tape), an optical medium (e.g., a DVD), or a semiconductor medium (e.g., a solid state disk (SSD)).

It should be understood that in the various embodiments of the present disclosure, a size of the serial numbers of the above processes does not imply an order of execution. The execution order of various processes should be determined by their functions and internal logics, but should not constitute any limitation on the implementation process of the embodiments of the present disclosure.

Those skilled in the art may clearly understand that, for the convenience and brevity of description, the specific working processes of the systems, devices/apparatuses and units described above may refer to the corresponding processes in the aforementioned method embodiments, which will not be repeated herein.

The above description is only the specific implementation of the present disclosure, but the protection scope of the present disclosure is not limited thereto. Any skilled familiar with this technical field may easily think of changes or substitutions within the technical scope disclosed in the present disclosure, which should be all covered within the protection scope of the present disclosure. Therefore, the protection scope of the present disclosure shall be subjects to the protection scope of the claims.

## Claims

1. A communication method, comprising:
transmitting, by a first network element, a first message, wherein the first message comprises at least one of following information:
service area information of the first network element;
sensing capability information of the first network element; or
sensing task information carried by the first network element.

2. The method according to claim 1, wherein the sensing capability information comprises at least one of following:
a type of sensing data that supports processing;
a supported sensing scenario;
a supported sensing accuracy; or
a supported sensing mode.

3. The method according to claim 1, wherein the sensing task information carried by the first network element comprises:
sensing information of a sensing task that has been performed completely by the first network element; and/or
sensing information of a sensing task that is being performed by the first network element.

4. The method according to claim 3, wherein the sensing information comprises at least one of following:
a sensing task type;
sensing target information;
sensing result description information;
a mode of performing the sensing task;
a sensing node involved in the sensing task;
time information for performing the sensing task; or
a number of sensing tasks being performed.

5. The method according to any one of claims 1 to 4, wherein the first message comprises a registration request message, and the first network element transmits the registration request message to a second network element.

6. The method according to claim 5, further comprising: receiving, by the first network element, a registration response message from the second network element.

7. The method according to claim 5 or 6, wherein the second network element comprises a core network element or an application function (AF).

8. The method according to claim 7, wherein the core network element comprises a network repository function (NRF), a network exposure function (NEF), a unified data management function (UDM) or a unified data repository function (UDR).

9. The method according to any one of claims 1 to 4, wherein the first message comprises a sensing task information notification message, and the first network element transmits the sensing task information notification message to a third network element.

10. The method according to claim 9, wherein the transmitting, by the first network element, the first message, comprises:
in a case where a sensing task request is received and/or a sensing task that is being performed meets sensing task screening information, transmitting, by the first network element, the first message.

11. The method according to claim 10, before the first network element transmits the sensing task information notification message to the third network element, further comprising:
receiving, by the first network element, a sensing task information subscription message from the third network element, wherein the sensing task information subscription message comprises the sensing task screening information.

12. The method according to claim 11, wherein the sensing task screening information comprises at least one of a sensing task identifier, a sensing task type, a sensing task requirement, or a sensing mode.

13. The method according to any one of claims 9 to 12, wherein the third network element comprises a core network element or a sensing task consumer.

14. The method according to claim 13, wherein the core network element comprises an access and mobility management function (AMF) or an NEF.

15. The method according to claim 13, wherein the sensing task consumer comprises an AF, a user equipment (UE) or a radio access network (RAN) device.

16. The method according to any one of claims 1 to 15, further comprising:
receiving, by the first network element, a sensing request message, wherein the sensing request message carries a sensing task requirement of a requested sensing task; and
determining, by the first network element, a sensing result of the requested sensing task by using a sensing result of a sensing task that has been performed completely and/or a sensing result of a sensing task that is being performed.

17. The method according to claim 16, wherein the sensing task requirement of the requested sensing task comprises at least one of following:
a sensing task type, sensing target information, sensing node information, a sensing mode, a sensing data type, a sensing accuracy, a sensing resolution, a frame rate, a duration, a delay or sensing target area information of the requested sensing task.

18. The method according to any one of claims 1 to 17, wherein the first network element comprises a sensing function network element (SF), a sensing function user plane network element (SF-U) or a sensing function control plane network element (SF-C).

19. A communication method, comprising:
receiving, by a second network element, a registration request message from a first network element, wherein the registration request message comprises at least one of following information:
service area information of the first network element;
sensing capability information of the first network element; or
sensing task information carried by the first network element.

20. The method according to claim 19, wherein the sensing capability information comprises at least one of following:
a type of sensing data that supports processing;
a supported sensing scenario;
a supported sensing accuracy; or
a supported sensing mode.

21. The method according to claim 19, wherein the sensing task information carried by the first network element comprises:
sensing information of a sensing task that has been performed completely by the first network element; and/or
sensing information of a sensing task that is being performed by the first network element.

22. The method according to claim 21, wherein the sensing information comprises at least one of following:
a sensing task type;
sensing target information;
sensing result description information;
a mode of performing the sensing task;
a sensing node involved in the sensing task;
time information for performing the sensing task; or
a number of sensing tasks being performed.

23. The method according to any one of claims 19 to 22, further comprising: transmitting, by the second network element, a registration response message to the first network element.

24. The method according to any one of claims 19 to 23, further comprising: receiving, by the second network element, a second message, wherein the second message carries a sensing task requirement.

25. The method according to claim 24, wherein the sensing task requirement comprises at least one of following:
a sensing task type, sensing target information, sensing node information, a sensing mode, a sensing data type, a sensing accuracy, a sensing resolution, a frame rate, a duration, a delay or sensing target area information.

26. The method according to claim 24 or 25, further comprising: the second message comprising a sensing node query request, and receiving, by the second network element, the second message from a fourth network element.

27. The method according to any one of claims 24 to 26, further comprising:
determining, by the second network element, one or more first network elements that meet a first requirement based on the sensing task requirement comprised in the second message; and
transmitting, by the second network element, identifiers and/or workloads of the one or more first network elements;
wherein the first requirement comprises at least one of following:
that the sensing task requirement is met;
that a sensing result of a sensing task requested by the second message is able to be determined based on a sensing result and/or a sensing measurement data of a sensing task that has been performed completely by the first network element; or
that the sensing result of the sensing task requested by the second message is able to be determined based on a sensing result and/or a sensing measurement data of a sensing task that is being performed by the first network element.

28. The method according to claim 27, wherein the workloads comprise a number of sensing tasks being performed by the first network element.

29. The method according to any one of claims 26 to 28, wherein a fourth network element comprises an AMF or an NEF.

30. The method according to any one of claims 19 to 29, wherein the first network element comprises an SF, an SF-C or an SF-U.

31. The method according to any one of claims 19 to 29, wherein the second network element includes a core network element or an AF.

32. The method according to claim 30, wherein a core network element comprises an NRF, an NEF, a UDM or a UDR.

33. A communication method, comprising:
receiving, by a third network element, a sensing task information notification message from a first network element, wherein the sensing task information notification message comprises at least one of following information:
service area information of the first network element;
sensing capability information of the first network element; or
sensing task information carried by the first network element.

34. The method according to claim 33, wherein the sensing capability information comprises at least one of following:
a type of sensing data that supports processing;
a supported sensing scenario;
a supported sensing accuracy; or
a supported sensing mode.

35. The method according to claim 33, wherein the sensing task information carried by the first network element comprises:
sensing information of a sensing task that has been performed completely by the first network element; and/or
sensing information of a sensing task that is being performed by the first network element.

36. The method according to claim 35, wherein the sensing information comprises at least one of following:
a sensing task type;
sensing target information;
sensing result description information;
a mode of performing the sensing task;
a sensing node involved in the sensing task;
time information for performing the sensing task; or
a number of sensing tasks being performed.

37. The method according to any one of claims 33 to 36, before the third network element receives the sensing task information notification message from the first network element, further comprising:
transmitting, by the third network element, a sensing task information subscription message to the first network element, wherein the sensing task information subscription message comprises sensing task screening information.

38. The method according to claim 37, wherein the sensing task screening information comprises at least one of a sensing task identifier, a sensing task type, a sensing task requirement, or a sensing mode.

39. The method according to claim 37 or 38, wherein the information comprised in the sensing task information notification message meets the sensing task screening information.

40. The method according to any one of claims 33 to 39, further comprising:
receiving, by the third network element, a sensing request message, wherein the sensing request message carries at least one of a sensing task requirement, a sensing control network element identifier, or a sensing task execution node identifier of a sensing task.

41. The method according to claim 40, further comprising:
determining, by the third network element, a first network element that meets the sensing request message based on the information in the sensing task information notification message; and
transmitting, by the third network element, a sensing request to the determined first network element.

42. The method according to claim 41, wherein the sensing request carries the sensing task requirement of the sensing task.

43. The method according to any one of claims 40 to 42, wherein the sensing task requirement of the sensing task comprises at least one of following:
a sensing task type, sensing target information, a sensing mode, a sensing data type, a sensing accuracy, a sensing resolution, a frame rate, a duration, a delay or sensing area of the sensing task.

44. The method according to any one of claims 40 to 43, wherein the third network element receives the sensing request message from a sensing task consumer or a core network element.

45. The method according to claim 44, wherein the sensing task consumer comprises a UE, an AF or an RAN device.

46. The method according to any one of claims 33 to 45, wherein the third network element comprises an AMF or an NEF.

47. The method according to any one of claims 33 to 45, wherein the first network element comprises an SF, an SF-C or an SF-U.

48. A communication method, comprising:
transmitting, by a sensing task consumer or a core network element, a sensing request message, wherein the sensing request message carries at least one of a sensing task requirement, a sensing control network element identifier, or a sensing task execution node identifier of a sensing task.

49. The method according to claim 48, wherein the sensing task requirement of the sensing task comprises at least one of following:
a sensing task type, sensing target information, sensing node information, a sensing mode, a sensing data type, a sensing accuracy, a sensing resolution, a frame rate, a duration, a delay or sensing target area information of the sensing task.

50. The method according to claim 48 or 49, wherein the sensing control network element identifier comprises an SF ID, an SF-C ID or an SF-U ID.

51. The method according to claim 50, wherein the sensing control network element identifier comprises: a system internal ID, a system external ID, a group ID, or a group of IDs.

52. The method according to claim 48 or 49, wherein the sensing task execution node identifier comprises:
an identifier of a UE for performing a sensing measurement; and/or
an identifier of an RAN device for performing the sensing measurement.

53. A first network element, comprising:
a first transmitting module, configured to transmit a first message, wherein the first message comprises at least one of following information:
service area information of the first network element;
sensing capability information of the first network element; or
sensing task information carried by the first network element.

54. A second network element, comprising:
a fourth receiving module, configured to receive a registration request message from a first network element, wherein the registration request message comprises at least one of following information:
service area information of the first network element;
sensing capability information of the first network element; or
sensing task information carried by the first network element.

55. A third network element, comprising:
a sixth receiving module, configured to receive a sensing task information notification message from a first network element, wherein the sensing task information notification message comprises at least one of following information:
service area information of the first network element;
sensing capability information of the first network element; or
sensing task information carried by the first network element.

56. A device, comprising:
a sixth transmitting module, configured to transmit a sensing request message, wherein the sensing request message carries at least one of a sensing task requirement, a sensing control network element identifier or a sensing task execution node identifier of a sensing task.

57. A communication device, comprising: a processor, a memory and a transceiver, wherein the memory is configured to store a computer program, the processor is configured to call and run the computer program stored in the memory, and control the transceiver to perform the method according to any one of claims 1 to 18, 19 to 32, 33 to 47 or 48 to 52.

58. A chip, comprising: a processor, configured to call and run a computer program from a memory, to enable a device equipped with the chip to perform the method according to any one of claims 1 to 18, 19 to 32, 33 to 47 or 48 to 52.

59. A computer readable storage medium, configured to store a computer program, wherein the computer program enables a computer to perform the method according to any one of claims 1 to 18, 19 to 32, 33 to 47 or 48 to 52.

60. A computer program product, comprising computer program instructions, wherein the computer program instructions enable a computer to perform the method according to any one of claims 1 to 18, 19 to 32, 33 to 47 or 48 to 52.

61. A computer program, wherein the computer program enables a computer to perform the method according to any one of claims 1 to 18, 19 to 32, 33 to 47 or 48 to 52.
